# EUROPEAN PATENT APPLICATION

(11) **EP 4 379 181 A1**
(43) Date of publication of application: **05.06.2024**
(21) Application number: 22900414.8
(22) Date of filing: 28.11.2022
(51) Int. Cl.: E05F 15/75, B60J 5/04

(54) **CONTROL METHOD AND CONTROL APPARATUS FOR OPENING OF VEHICLE DOOR, AND VEHICLE CONTROLLER**

(30) Priority: 30.11.2021 CN 202111443403
(71) Applicant: BYD Company Limited, Shenzhen, Guangdong 518118 (CN)
(72) Inventor: QIU, Shoufa, Shenzhen, Guangdong 518118 (CN); YUAN, Xiansong, Shenzhen, Guangdong 518118 (CN); LIU, Jianping, Shenzhen, Guangdong 518118 (CN); LI, Fangcheng, Shenzhen, Guangdong 518118 (CN); LIU, Tengyong, Shenzhen, Guangdong 518118 (CN)
(74) Representative: DehnsGermany Partnerschaft von Patentanwälten
(86) International application number: PCT/CN2022/134625
(87) International publication number: WO 2023/098610

(57) **Abstract**

A method and an apparatus for controlling opening of a vehicle door, and a vehicle controller are provided. The control method includes: collecting a knocking signal; when it is determined, based on the knocking signal, that the knocking signal is effective, obtaining status information of a vehicle, where the status information includes a vehicle door status, a vehicle speed, and a lock status of the vehicle; and when it is determined that the status information of the vehicle meets a preset condition, responding to the knocking signal, and controlling the vehicle door to be opened.

## Description

### CROSS-REFERENCE TO RELATED APPLICATIONS

The present disclosure claims priority to Chinese Patent Application No. 202111443403.X filed on November 30, 2021, which is incorporated herein by reference in its entirety.

### FIELD

The present disclosure relates to the field of vehicle technologies, and in particular, to a method for controlling opening of a vehicle door, an apparatus for controlling opening of a vehicle door, a vehicle controller, and a computer-readable storage medium.

### BACKGROUND

As people' demand for vehicles increases, there is an increasing need of the automated and intelligent electric-driven opening of side doors which are a mechanism for passengers to get on or off the vehicle. For conventional side doors, the passenger needs to pull the handle on the outer side of the door to unlock a vehicle door lock through a mechanical structure connection. After the vehicle door lock is unlocked, the passenger also needs to push the side door open for getting on or off. The process is cumbersome and makes it difficult for the passenger to get on or off especially when both hands of the passenger are occupied and cannot operate the handle on the side door.

For a handleless automatic vehicle door system, a vehicle with a handleless vehicle door is provided in the related art, that is, no handle is disposed on the vehicle door of such a vehicle, and the vehicle door is unlocked by using a button apparatus on the B or C pillar of the vehicle. As such, the conventional handle is replaced. For an electric-driven door opening function of the automatic vehicle door system, a precise method for controlling automatic door opening through sensing without manual operation is studied by using different control strategies.

However, the foregoing control strategy has a series of problems caused by perforation and sealing of sheet metal or a decorative panel, making it difficult for layout. In addition, to accurately identify a door opening intention of a user, a relatively complex algorithm is generally required, and hardware costs are also relatively high.

### SUMMARY

The present disclosure is intended to resolve one of technical problems in the related art at least to some extent. Accordingly, the present disclosure provides a method for controlling opening of a vehicle door. The vehicle door is opened in a knocking manner. The method is simple to operate and creates greater interest in human-computer interaction. In addition, the determination in the knocking control method is made based on a principle such as mechanics, so that the algorithm is simplified, the original vehicle appearance can be maintained, and costs are reduced.

The present disclosure provides an apparatus for controlling opening of a vehicle door.

The present disclosure provides a vehicle controller.

The present disclosure provides a vehicle.

The present disclosure provides a computer-readable storage medium.

An embodiment according to a first aspect of the present disclosure provides a method for controlling opening of a vehicle door, including: collecting a knocking signal; when it is determined, based on the knocking signal, that the knocking signal is effective, obtaining status information of a vehicle, where the status information includes a vehicle door status, a vehicle speed, and a lock status of the vehicle; and when it is determined that the status information of the vehicle meets a preset condition, responding to the knocking signal, and controlling the vehicle door to be opened.

According to the method for controlling opening of a vehicle door in an embodiment of the present disclosure, the knocking signal is first collected; then, when it is determined, based on the knocking signal, that the knocking signal is effective, the status information of the vehicle is obtained, where the status information includes the vehicle door status, the vehicle speed, and the lock status of the vehicle; and finally, when it is determined that the status information of the vehicle meets the preset condition, the knocking signal is responded to, and the vehicle door is controlled to be opened. In the control method, the vehicle door is opened in a knocking manner. The method is simple to operate and creates greater interest in human-computer interaction. In addition, with the manner of opening through knocking, the original vehicle appearance can be maintained, and reconstruction costs are reduced.

In addition, the method for controlling opening of a vehicle door according to the foregoing embodiment of the present disclosure may further have the following additional technical features:

According to an embodiment of the present disclosure, that it is determined, based on the knocking signal, that the knocking signal is effective includes: when a knocking force value corresponding to the knocking signal is greater than a preset knocking force value, determining that the knocking signal is effective.

According to another embodiment of the present disclosure, that it is determined, based on the knocking signal, that the knocking signal is effective includes: when a quantity of knocking signals collected within a first preset time period reaches a set quantity and a knocking force value corresponding to each of the knocking signals collected is greater than the preset knocking force value, determining that the knocking signal is effective.

According to still another embodiment of the present disclosure, that it is determined, based on the knocking signal, that the knocking signal is effective includes: when the quantity of knocking signals collected within the first preset time period reaches the set quantity, the knocking force value corresponding to each of the knocking signals collected is greater than the preset knocking force value, and no knocking action occurs within a second preset time period that is after the vehicle door is opened and then closed, determining that the knocking signal is effective.

According to an embodiment of the present disclosure, when the vehicle door is in a closed state, the vehicle is in an unlocked state, and the vehicle speed of the vehicle is less than a preset vehicle speed, it is determined that the status information of the vehicle meets the preset condition.

According to an embodiment of the present disclosure, before the controlling the vehicle door to be opened, the method further includes: obtaining information about a road condition around the vehicle; and determining, based on the information about the road condition, whether an obstacle exists outside the vehicle door.

According to an embodiment of the present disclosure, when no obstacle exists outside the vehicle door, the vehicle door is controlled to be unlocked and to start opening.

According to an embodiment of the present disclosure, during the opening of the vehicle door, the method further includes: when it is determined that an obstacle exists outside the vehicle door, controlling the vehicle door to hover.

According to an embodiment of the present disclosure, during the opening of the vehicle door, the method for controlling opening of a vehicle door further includes: when it is determined that no obstacle exists outside the vehicle door, controlling the vehicle door to be opened to a preset maximum angle.

An embodiment according to a second aspect of the present disclosure provides an apparatus for controlling opening of a vehicle door, comprising: a collection module, configured to collect a knocking signal; a determining module, configured to: when determining, based on the knocking signal, that the knocking signal is effective, obtain status information of a vehicle, where the status information includes a vehicle door status, a vehicle speed, and a lock status of the vehicle; and a control module, configured to: when determining that the status information of the vehicle meets a preset condition, respond to the knocking signal, and control the vehicle door to be opened.

Based on the apparatus for controlling opening of a vehicle door according to this embodiment of the present disclosure, the collection module collects the knocking signal; then, when determining, based on the knocking signal, that the knocking signal is effective, the determining module obtains the status information of the vehicle, where the status information includes the vehicle door status, the vehicle speed, and the lock status of the vehicle; and when determining that the status information of the vehicle meets the preset condition, the control module responds to the knocking signal, and controls the vehicle door to be opened. For the apparatus, the manner of opening the vehicle door through knocking is simple to operate and creates greater interest in human-computer interaction. In addition, with the manner of opening through knocking, the original vehicle appearance can be maintained, and reconstruction costs are reduced.

An embodiment according to a third aspect of the present disclosure provides a vehicle controller, including: a memory, a processor, and a vehicle door opening controlling program stored in the memory and executable by the processor. When the vehicle door opening controlling program is executed by the processor, the method for controlling opening of a vehicle door is implemented.

Based on the vehicle controller in this embodiment of the present disclosure, the processor executes a vehicle door opening controlling program, to implement the foregoing method for controlling opening of a vehicle door. The method is simple to operate and creates greater interest in human-computer interaction. In addition, with the manner of opening through knocking, the original vehicle appearance can be maintained, and reconstruction costs are reduced.

An embodiment according to a fifth aspect of the present disclosure provides a vehicle, including the foregoing vehicle controller.

For the vehicle in this embodiment of the present disclosure, based on the foregoing vehicle controller, a human-computer interaction process may be more interesting, the original vehicle appearance can be maintained, and reconstruction costs are reduced.

An embodiment according to a fifth aspect of the present disclosure provides a computer-readable storage medium, storing a vehicle door opening controlling program which, when executed by a processor, implements the method for controlling opening of a vehicle door.

Based on the computer-readable storage medium in this embodiment of the present disclosure, when the processor executes the vehicle door opening controlling program stored on the processor, the foregoing method for controlling opening of a vehicle door is implemented. The method is simple to operate and creates greater interest in human-computer interaction. In addition, with the manner of opening through knocking, the original vehicle appearance can be maintained, and reconstruction costs are reduced.

The additional aspects and advantages of the present disclosure are partially provided in the following descriptions, some of which will become apparent from the following descriptions or may be learned from practices of the present disclosure.

### BRIEF DESCRIPTION OF THE DRAWINGS

FIG. 1 is a flowchart of a method for controlling opening of a vehicle door according to an embodiment of the present disclosure;
FIG. 2 is a flowchart of a method for controlling opening of a vehicle door according to a specific embodiment of the present disclosure;
FIG. 3 is a schematic block diagram of an apparatus for controlling opening of a vehicle door according to an embodiment of the present disclosure;
FIG. 4 is a schematic block diagram of a vehicle controller according to an embodiment of the present disclosure; and
FIG. 5 is a schematic block diagram of a vehicle according to an embodiment of the present disclosure.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, are intended to explain the present disclosure and cannot be construed as a limitation on the present disclosure.

A method for controlling opening of a vehicle door, an apparatus for controlling opening of a vehicle door, a vehicle controller, and a computer-readable storage medium that are provided in the embodiments of the present disclosure are described below with reference to the accompanying drawings.

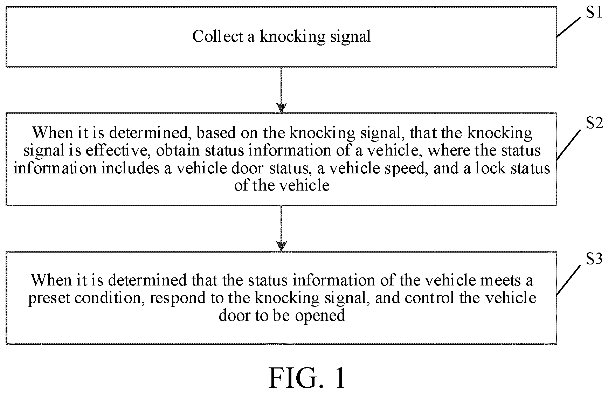

FIG. 1 is a flowchart of a method for controlling opening of a vehicle door according to an embodiment of the present disclosure.

As shown in FIG. 1, the method for controlling opening of a vehicle door according to this embodiment of the present disclosure includes the following steps.

S 1. A knocking signal is collected.

Specifically, when a user knocks on a sensing area, a sensing surface of a knocking sensor receives knocking force and transfers the knocking signal to a vehicle controller through a wiring harness. The knocking sensor may be a force value detection sensor, and detects a knocking force value to distinguish an effective knocking signal.

In an embodiment of the present disclosure, the knock sensor may be installed between an outer panel of the vehicle door and an inner panel of the vehicle door. On an inner side of sheet metal of the outer panel of the vehicle door, the sensing surface fits the inner side of the outer panel of the vehicle door and may be fastened by using a corresponding bracket. The bracket is connected and fastened to the sheet metal by using a glue-type connecting material, to achieve an objective of fastening. In addition, the knocking sensor is hidden on the inner side of the sheet metal of the outer panel of the vehicle door, the outer panel of the vehicle door does not need to be perforated, thereby eliminating a series of problems caused by perforation and sealing of the sheet metal or a decorative plate. A layout is simple, and costs are reduced. An installation surface of the sensing surface of the knocking sensor is provided on the inner side of the outer panel of the vehicle door, to form a knocking sensing area. The user may be reminded by using different stickers in the knock sensing area on the outer side of the outer panel of the vehicle door based on an individual need.

S2. When it is determined, based on the knocking signal, that the knocking signal is effective, status information of a vehicle is obtained, where the status information includes a vehicle door status, a vehicle speed, and a lock status of the vehicle.

According to an embodiment of the present disclosure, that it is determined, based on the knocking signal, that the knocking signal is effective may include: when a knocking force value corresponding to the knocking signal is greater than a preset knocking force value, determining that the knocking signal is effective.

Specifically, a knocking force value of a single knocking signal is used as an effective determining condition. For example, the preset knocking force value is set to F, a knocking force value of a knocking signal obtained by the knocking sensor in real time is f, and the knocking force value f is compared with the prestored F (the preset knocking force value). If f is greater than F, the knocking signal is effective. If f is less than or equal to F, it is considered that the knocking signal is ineffective.

To improve determining accuracy, according to another embodiment of the present disclosure, that it is determined, based on the knocking signal, that the knocking signal is effective may include: when a quantity of knocking signals collected within a first preset time period reaches a set quantity and a knocking force value corresponding to each of the knocking signals collected is greater than the preset knocking force value, determining that the knocking signal is effective. The first preset time period may be calibrated according to an actual situation. For example, the first preset time period may be 1s, and the set quantity may be 2.

Specifically, a quantity of effective knocking signals within the first preset time period and the knocking force values are used as effective determining conditions. For example, when two knocking signals are collected within the first preset time period, and a knocking force value of each of the knocking signals collected is greater than the preset knocking force value, it is considered that the knocking signal is effective. If the knocking signal is not collected twice within the first preset time period, or a knocking force value of the collected knocking signal does not reach the preset knocking force value, it is considered that the current knocking signal is ineffective.

To further improve determining accuracy, according to still another embodiment of the present disclosure, that it is determined, based on the knocking signal, that the knocking signal is effective may include: when the quantity of knocking signals collected within the first preset time period reaches the set quantity, the knocking force value corresponding to each of the knocking signals collected is greater than the preset knocking force value, and no knocking action occurs within a second preset time period that is after the vehicle door is opened and then closed, determining that the knocking signal is effective. The foregoing preset knocking force value, the first preset time period, and the second preset time period may be preset and stored based on an actual application. For example, the first preset time period may be 1s and the second preset time period may be 500 ms.

Specifically, a quantity of knocks within the first preset time period, the knocking force value, and a first knock action time are used as effective determining conditions. For example, the determination is made based on the foregoing quantity of knocking signals within the first preset time period. When the quantity of knocks within the first preset time period reaches the set quantity, and a knocking force value corresponding to each of the knocking signals is greater than the preset knocking force value, to improve accuracy in determining whether the knocking signal is effective, a time of a first knocking signal is further obtained to determine whether the time falls within a time period that is after the vehicle door is opened and then closed. If not, it indicates that the current knocking signal is caused by vibration generated by closing the vehicle door. If yes, it indicates that the current knocking signal is effective. In such a manner, a case in which the vibration caused by closing the vehicle door is considered as the knocking signal may be avoided.

In addition, in the foregoing manner, a timing operation that starts on a system when the vehicle door is opened and then closed can automatically stop when a second preset time has elapsed since the timing and no knocking signal is detected, that is, all subsequent knocking operations meet a condition that the knocking action occurs within the second preset time period that is after the vehicle door is opened and then closed, and then effectiveness of the knocking signal is determined by using the method in which the quantity of effective knocking signals and the knocking force values within the first preset time period are used as the effective determining conditions. The foregoing timing operation automatically starts after the vehicle door is opened and then closed, and then effectiveness of the knocking signal is re-identified according to the foregoing determining method. It can be understood that the foregoing timing operation is reset to zero or restarted next time an operation that the vehicle door is opened and then closed occurs.

It should be noted that the determining manners in the foregoing three embodiments may all implement the method for controlling a vehicle door in the present disclosure. Different determining methods can be selected based on an actual working condition of the vehicle. Accuracy of determining whether the knocking signal is effective in the foregoing embodiments gradually increase.

According to an embodiment of the present disclosure, when the vehicle door is in a closed state, the vehicle is in an unlocked state, and the vehicle speed of the vehicle is less than a preset vehicle speed, it is determined that the status information of the vehicle meets the preset condition. The preset vehicle speed may be preset based on an actual situation. For example, the preset vehicle speed may be 3 km/h.

Specifically, when it is determined that the knocking signal is an effective signal, the vehicle door status, the vehicle speed, and the lock status of the vehicle are respectively obtained. When the vehicle door is in a closed state, the vehicle is in an unlocked state, that is, a lock-released state, and a current vehicle speed is less than the preset vehicle speed, the status information of the vehicle meets the preset condition.

S3: When it is determined that the status information of the vehicle meets the preset condition, the knocking signal is responded to, and the vehicle door is controlled to be opened.

Specifically, when it is determined that a status signal of the vehicle meets the preset condition, the knocking signal is responded to, the vehicle door is controlled to be unlocked, a corresponding drive mechanism (a side door drive mechanism) is controlled to drive a motor, and the vehicle door is driven to move away from a vehicle body, to implement a door opening action.

According to an embodiment of the present disclosure, before the controlling the vehicle door to be opened, the method further includes: obtaining information about a road condition around the vehicle; and determining, based on the information about the road condition, whether an obstacle exists outside the vehicle door.

Specifically, image information at a same angle as a rearview mirror may be captured by using left and right cameras respectively installed on the rearview mirror of the vehicle, and is processed to determine whether there is an obstacle or pedestrian within a range. Alternatively, rear image information is collected by using a millimeter wave radar installed in the rear of the vehicle, to determine, based on the rear image information, whether there is an oncoming vehicle behind the vehicle. In addition, image information on both sides of the vehicle is collected by using an ultrasonic radar installed on a vehicle body.

The millimeter wave radar may detect a human and an object 20 meters away, and the ultrasonic radar may detect a human, an object, a falling object, and a nearby small obstacle within 2 meters. By using the camera disposed on the rearview mirror of the vehicle, the ultrasonic radar on the vehicle body, and the millimeter wave radar in the rear of the vehicle, all-round detection of the information about the road condition around the vehicle may be implemented.

According to an embodiment of the present disclosure, when an obstacle exists outside the vehicle door, the vehicle door is controlled to be unlocked. That is, when it is determined that an obstacle exists outside the vehicle door, the vehicle door is first controlled to be unlocked, but not to be opened. Then it is determined whether a distance between the obstacle and the vehicle is greater than a preset distance, for example, the vehicle door may be opened to an angle, so that a human may get on or off the vehicle. If the distance between the obstacle and the vehicle is greater than the preset distance, it is considered that the vehicle door may be opened, and then an opening angle of the vehicle door is controlled based on the distance between the obstacle and the vehicle.

According to an embodiment of the present disclosure, when no obstacle exists outside the vehicle door, the vehicle door is controlled to be unlocked and to start opening.

Specifically, when the knocking signal is an effective signal and the status information of the vehicle meets the preset condition, before a corresponding vehicle door assembly is controlled to be opened, a side door detection radar installed on a corresponding vehicle door is first waken up to make a determination regarding obstacles outside the vehicle door, feeds back, to a domain control, an obstacle signal and a distance to the obstacle, then obtains the information about the road condition around the vehicle based on feedback information, and determines whether an obstacle exists outside the vehicle door. For example, the system may pre-store a safe distance based on an area required for opening of the vehicle door. If the distance to the obstacle obtained by the side door detection radar is less than or equal to the safe distance, that is, the obstacle falls within a vehicle door opening area, and the vehicle door easily collides with the obstacle after the vehicle door is opened, it is determined that an obstacle exists outside the vehicle door, and the vehicle door is controlled to be unlocked, but no driving signal is output to the side door drive mechanism, to keep the vehicle door in a closed state. If the distance obtained by the side door detection radar is greater than the safe distance, that is, the obstacle is located outside the vehicle door opening area, and the vehicle door does not collide with the obstacle during the opening of the vehicle door, it is determined that no obstacle exists outside the vehicle door, the vehicle door is controlled to be unlocked, and the side door drive mechanism performs a door opening action. In an embodiment, a speed sensor or an acceleration sensor is disposed on the side door drive mechanism, and the speed sensor or the acceleration sensor is connected to the vehicle controller, to feed back an opening status of the vehicle door to the vehicle controller in real time.

It can be understood that a vehicle door unlocking structure in this embodiment of the present disclosure is an electric unlocking structure.

It should be noted that the foregoing safety distance may be set based on an actual opening direction of the vehicle door and a size of the vehicle door, and meeting normal opening of the vehicle door is used as a setting premise.

To prevent emergency occurrence, according to an embodiment of the present disclosure, during the opening of the vehicle door, the method further includes: when it is determined that an obstacle exists outside the vehicle door, controlling the vehicle door to hover.

That is, during the opening of the vehicle door, when the obstacle is detected outside the vehicle door, for example, the obstacle is a pedestrian, and the pedestrian approaches the vehicle while the vehicle door automatically opens, or for example, there is a falling object or a small obstacle, the vehicle door is controlled to stop immediately, that is, controls the vehicle door to hover. In this case, hitting the pedestrian in an unexpected situation or causing a risk of collision may be avoided.

According to an embodiment of the present disclosure, during the opening of the vehicle door, the method further includes: when it is determined that no obstacle exists outside the vehicle door, controlling the vehicle door to be opened to a preset maximum angle.

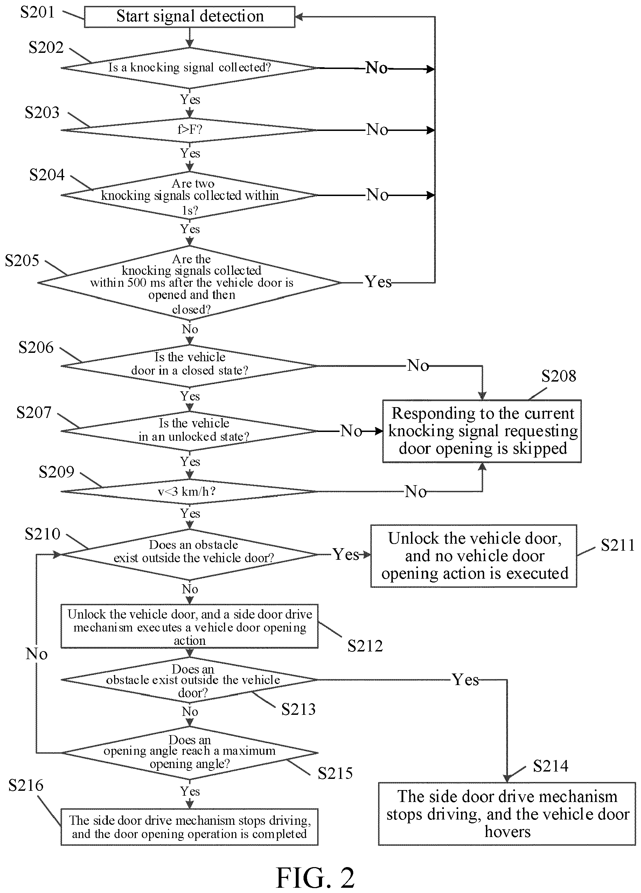

Specifically, in a process in which the vehicle door is opened by using the side door drive mechanism, the side door detection radar detects an obstacle outside the vehicle door in real time, and feeds back, to the vehicle controller in real time, an obstacle signal and a distance to the obstacle. Then the vehicle controller makes a determination on a surrounding road condition based on the obstacle information fed back in real time. If it is determined that there is no obstacle outside the vehicle door, the vehicle door is controlled to be opened to a preset maximum angle. In a specific example of a method for controlling opening of a vehicle door in the present disclosure, as shown in FIG. 2, the method for controlling opening of a vehicle door includes the following steps.

S201: Signal detection is started.

S202: It is determined whether a knocking signal is collected. If yes, step S203 is performed. If not, step S201 is performed.

S203: It is determined whether a knocking force value f corresponding to the knocking signal is greater than a preset knocking force value F. If yes, step S204 is performed. If not, step S201 is performed.

S204: It is determined whether two effective knocking signals are collected within a first preset time period of 1s. If yes, step S205 is performed. If not, step S201 is performed.

S205: It is determined whether the first knocking signal is collected within 500 ms after the vehicle door is opened and then closed. If yes, step S206 is performed. If not, step S201 is performed.

S206: It is determined whether the vehicle door is in a closed state. If yes, step S207 is performed. If not, step S208 is performed.

S207: It is determined whether the vehicle is in an unlocked state. If yes, step S209 is performed. If not, step S208 is performed.

S208: Responding to the current knocking signal requesting door opening is skipped.

S209: It is determined whether a current vehicle speed v is less than a set vehicle speed of 3 km/h. If yes, step S210 is performed. If not, step S208 is performed.

S210: It is determined whether an obstacle exists outside the vehicle door. If yes, step S211 is performed. If not, step S212 is performed.

S211: The vehicle door is unlocked, and does not execute a vehicle door opening action.

S212: The vehicle door is unlocked, and a side door drive mechanism executes a vehicle door opening action.

S213: It is determined whether an obstacle exists outside the vehicle door during opening. If yes, step S214 is performed. If not, step S215 is performed.

S214: The side door drive mechanism stops driving, and the vehicle door hovers.

S215: It is determined whether an opening angle of the vehicle door reaches a maximum opening angle. If yes, step S216 is performed. If not, step S212 is performed.

S216: The side door drive mechanism stops driving, and the door opening operation is completed.

To sum up, compared with a conventional vehicle opening manner, in the control method in the present disclosure, the knocking-triggered opening manner is simple to operate and creates greater interest in human-computer interaction. Moreover, in an existing opening manner using an external handle or button, sheet metal or decorative panel usually needs to be perforated in the layout process for installation of an opening apparatus. In addition, special sealing is required at the opening to meet waterproof and dustproof requirements of the vehicle, and costs are relatively high. In addition, the perforation affects the overall appearance, is not conducive to the structural design. However, the layout manner in the present disclosure does not require perforation, and the opening apparatus is directly hidden inside the sheet metal or decorative panel, thereby eliminating a series of problems caused by perforation and sealing, reducing costs, causing no damage to the appearance of the vehicle, and facilitating the structural design.

According to the method for controlling opening of a vehicle door in the embodiment of the present disclosure, the knocking signal is first collected; then, when it is determined, based on the knocking signal, that the knocking signal is effective, the status information of the vehicle is obtained, where the status information includes the vehicle door status, the vehicle speed, and the lock status of the vehicle; and finally, when it is determined that the status information of the vehicle meets the preset condition, the knocking signal is responded to, and the vehicle door is controlled to be opened. Compared with a conventional vehicle opening manner, the manner of opening the vehicle door through knocking is simple to operate and creates greater interest in human-computer interaction. In addition, with the manner of opening through knocking, the original vehicle appearance can be maintained, and reconstruction costs are reduced. Corresponding to the foregoing embodiment, the present disclosure further provides an apparatus for controlling opening of a vehicle door.

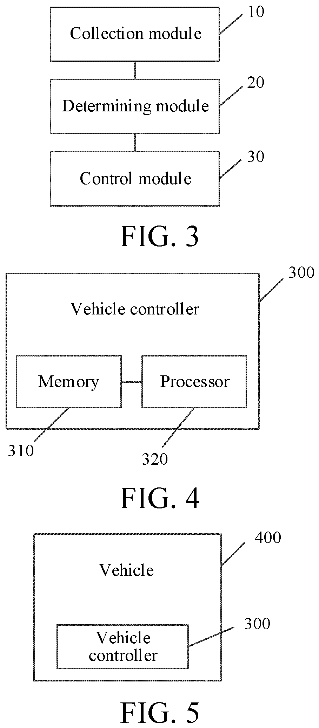

As shown in FIG. 3, the apparatus for controlling opening of a vehicle door in this embodiment of the present disclosure may include: a collection module 10, a determining module 20, and a control module 30.

The collection module 10 is configured to collect a knocking signal. The determining module 20 is configured to: when determining, based on the knocking signal, that the knocking signal is effective, obtain status information of a vehicle, where the status information includes a vehicle door status, a vehicle speed, and a lock status of the vehicle. The control module 30 is configured to: when determining that the status information of the vehicle meets a preset condition, respond to the knocking signal, and control the vehicle door to be opened.

According to an embodiment of the present disclosure, that the determining module 20 determines, based on the knocking signal, that the knocking signal is effective is specifically performed to: when a knocking force value corresponding to the knocking signal is greater than a preset knocking force value, determine that the knocking signal is effective.

According to another embodiment of the present disclosure, that the determining module 20 determines, based on the knocking signal, that the knocking signal is effective is specifically performed to: when a quantity of knocking signals collected within a first preset time period reaches a set quantity and a knocking force value corresponding to each of the knocking signals collected is greater than the preset knocking force value, determine that the knocking signal is effective.

According to still another embodiment of the present disclosure, that the determining module 20 determines, based on the knocking signal, that the knocking signal is effective is specifically performed to: when the quantity of knocking signals collected within the first preset time period reaches the set quantity, the knocking force value corresponding to each of the knocking signals collected is greater than the preset knocking force value, and no knocking action occurs within a second preset time period that is after the vehicle door is opened and then closed, determine that the knocking signal is effective.

According to an embodiment of the present disclosure, when the vehicle door is in a closed state, the vehicle is in an unlocked state, and the vehicle speed of the vehicle is less than a preset vehicle speed, the control module 30 determines that the status information of the vehicle meets the preset condition.

According to an embodiment of the present disclosure, before controlling the vehicle door to be opened, the control module 30 is specifically further configured to: obtain information about a road condition around the vehicle; and determine, based on the information about the road condition, whether an obstacle exists outside the vehicle door.

According to an embodiment of the present disclosure, when no obstacle exists outside the vehicle door, the control module 30 controls the vehicle door to be unlocked and to start opening.

According to an embodiment of the present disclosure, during the opening of the vehicle door, the control module 30 is specifically further configured to: when determining that an obstacle exists outside the vehicle door, control the vehicle door to hover.

According to an embodiment of the present disclosure, during the opening of the vehicle door, the control module 30 is specifically further configured to: when determining that no obstacle exists outside the vehicle door, control the vehicle door to be opened to a preset maximum angle.

It should be noted that for details not disclosed in the apparatus for controlling opening of a vehicle door in this embodiment of the present disclosure, refer to the details disclosed in the method for controlling opening of a vehicle door in the foregoing embodiment of the present disclosure. Details are not described herein.

The sum up, for the apparatus for controlling opening of a vehicle door according to this embodiment of the present disclosure, the collection module collects the knocking signal; then, when determining, based on the knocking signal, that the knocking signal is effective, the determining module obtains the status information of the vehicle, where the status information includes the vehicle door status, the vehicle speed, and the lock status of the vehicle; and when determining that the status information of the vehicle meets the preset condition, the control module responds to the knocking signal, and controls the vehicle door to be opened. For the apparatus, the manner of opening the vehicle door through knocking is simple to operate and creates greater interest in human-computer interaction. In addition, with the manner of opening through knocking, the original vehicle appearance can be maintained, and reconstruction costs are reduced.

Corresponding to the foregoing embodiment, the present disclosure further provides a vehicle controller.

As shown in FIG. 4, the vehicle controller 300 in an embodiment of the present disclosure includes: a memory 310, a processor 320, and a vehicle door opening controlling program stored in the memory 310 and executable by the processor. When the processor 320 executes the vehicle door opening controlling program, the method for controlling opening of a vehicle door is implemented.

Based on the vehicle controller in this embodiment of the present disclosure, the processor executes the vehicle door opening controlling program, to implement the foregoing method for controlling opening of a vehicle door. The method is simple to operate and creates greater interest in human-computer interaction. In addition, with the manner of opening through knocking, the original vehicle appearance can be maintained, and reconstruction costs are reduced.

Corresponding to the foregoing embodiment, the present disclosure further provides a vehicle.

As shown in FIG. 5, the vehicle 400 in an embodiment of the present disclosure includes: the foregoing vehicle controller 300.

For the vehicle in this embodiment of the present disclosure, based on the foregoing vehicle controller, a human-computer interaction process may be more interesting, the original vehicle appearance is maintained, and reconstruction costs are reduced.

Corresponding to the foregoing embodiment, the present disclosure further provides a computer-readable storage medium.

For the computer-readable storage medium in this embodiment of the present disclosure, a vehicle door opening controlling program is stored in the computer-readable storage medium, and when the vehicle door opening controlling program is executed by a processor, the method for controlling opening of a vehicle door is implemented.

Based on the computer-readable storage medium in this embodiment of the present disclosure, when the processor executes the vehicle door opening controlling program stored on the processor, the foregoing method for controlling opening of a vehicle door is implemented. In addition, with the manner of opening through knocking, the original vehicle appearance can be maintained, and reconstruction costs are reduced.

It should be noted that the logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium include the following: an electrical connection (an electronic apparatus) having one or more wires, a portable computer diskette (a magnetic apparatus), a random access memory (RAM), a read-only memory (ROM), an erasable programmable read-only memory (EPROM or a flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, parts of the present disclosure can be implemented by using hardware, software, firmware, or a combination thereof. In the foregoing implementations, multiple steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means at least two, for example, two or three.

In the present disclosure, it should be noted that unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art can understand specific meanings of the terms in the present disclosure based on specific situations.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A method for controlling opening of a vehicle door, comprising:
collecting a knocking signal;
when it is determined, based on the knocking signal, that the knocking signal is effective, obtaining status information of a vehicle, the status information comprising a vehicle door status, a vehicle speed, and a lock status of the vehicle; and
when it is determined that the status information of the vehicle meets a preset condition, responding to the knocking signal, and controlling the vehicle door to be opened.

2. The method for controlling opening of a vehicle door according to claim 1, wherein that it is determined, based on the knocking signal, that the knocking signal is effective comprises:
when a knocking force value corresponding to the knocking signal is greater than a preset knocking force value, determining that the knocking signal is effective.

3. The method for controlling opening of a vehicle door according to claim 1 or 2, wherein that it is determined, based on the knocking signal, that the knocking signal is effective comprises:
when a quantity of knocking signals collected within a first preset time period reaches a set quantity and a knocking force value corresponding to each of the knocking signals collected is greater than the preset knocking force value, determining that the knocking signal is effective.

4. The method for controlling opening of a vehicle door according to any one of claims 1 to 3, wherein that it is determined, based on the knocking signal, that the knocking signal is effective comprises:
when the quantity of knocking signals collected within the first preset time period reaches the set quantity, the knocking force value corresponding to each of the knocking signals collected is greater than the preset knocking force value, and no knocking action occurs within a second preset time period that is after the vehicle door is opened and then closed, determining that the knocking signal is effective.

5. The method for controlling opening of a vehicle door according to any one of claims 1 to 4, wherein when the vehicle door is in a closed state, the vehicle is in an unlocked state, and the vehicle speed of the vehicle is less than a preset vehicle speed, determining that the status information of the vehicle meets the preset condition.

6. The method for controlling opening of a vehicle door according to any one of claims 1 to 5, before the controlling the vehicle door to be opened, the method further comprising:
obtaining information about a road condition around the vehicle; and
determining, based on the information about the road condition, whether an obstacle exists outside the vehicle door.

7. The method for controlling opening of a vehicle door according to claim 6, wherein when no obstacle exists outside the vehicle door, the vehicle door is controlled to be unlocked and to start opening.

8. The method for controlling opening of a vehicle door according to claim 7, during the opening of the vehicle door, the method further comprising:
when it is determined that an obstacle exists outside the vehicle door, controlling the vehicle door to hover.

9. The method for controlling opening of a vehicle door according to claim 7 or 8, during the opening of the vehicle door, the method further comprising:
when it is determined that no obstacle exists outside the vehicle door, controlling the vehicle door to be opened to a preset maximum angle.

10. An apparatus for controlling opening of a vehicle door, comprising:
a collection module, configured to collect a knocking signal;
a determining module, configured to: when determining, based on the knocking signal, that the knocking signal is effective, obtain status information of a vehicle, the status information comprising a vehicle door status, a vehicle speed, and a lock status of the vehicle; and
a control module, configured to: when determining that the status information of the vehicle meets a preset condition, respond to the knocking signal, and control the vehicle door to be opened.

11. A vehicle controller, comprising: a memory, a processor, and a vehicle door opening controlling program stored in the memory and executable by the processor, when the processor executes the vehicle door opening controlling program, the method for controlling opening of a vehicle door according to any one of claims 1 to 9 being implemented.

12. A vehicle, comprising the vehicle controller according to claim 11.

13. A computer-readable storage medium, storing a vehicle door opening controlling program which, when executed by a processor, implements the method for controlling opening of a vehicle door according to any one of claims 1 to 9.
